(19) Europäisches Patentamt
European Patent Office
Office européen des brevets

(11) Veröffentlichungsnummer: **0 507 200 A1**

(12) **EUROPÄISCHE PATENTANMELDUNG**

(21) Anmeldenummer: **92105091.0**

(51) Int. Cl.5: **A22C 11/08**, F04C 2/44

(22) Anmeldetag: **25.03.92**

(30) Priorität: **30.03.91 DE 4110547**

(43) Veröffentlichungstag der Anmeldung: **07.10.92 Patentblatt 92/41**

(84) Benannte Vertragsstaaten: **AT CH DE DK ES FR GB IT LI NL SE**

(71) Anmelder: **VEMAG Maschinenbau GmbH**
**Weserstrasse 32**
**W-2810 Verden (Aller)(DE)**

(72) Erfinder: **Röse, Heinz**
**Intschede 91**
**W-2811 Blender(DE)**

(74) Vertreter: **Eisenführ, Speiser & Partner**
**Martinistrasse 24**
**W-2800 Bremen 1(DE)**

(54) **Flügelförderwerk.**

(57) Die Erfindung betrifft ein Flügelförderwerk zum Fördern von Masse, insbesondere von Brät, mit einem Gehäuse (4) mit einem Einlaß (6) und einem Auslaß (10) für die Masse. Im Gehäuse (4) ist ein Rotor (14) angeordnet, der ein drehbar gelagertes zentrales Antriebselement (16) und mehrere bewegliche Flügel (20a bis j) aufweist, die am zentralen Antriebselement (16) in dessen Drehrichtung (C) hintereinander und winklig zur Drehrichtung (C) angeordnet und gemeinsam von einer in Bewegungsrichtung (C) der Flügel (20a bis j) umlaufenden Begrenzungswand (24) des Gehäuses (4) umgeben sind, mit der Begrenzungswand (24) Förderkammern zur Aufnahme von Masse bilden und bei Rotation des Antriebselementes (16) der Reihe nach am Einlaß (6) und am Auslaß (10) vorbei bewegt werden. Es sind Steuermittel zum definierten Heranfahren der Flügel (20a bis j) an die Begrenzungswand (24) bis auf einen bestimmten Mindestabstand vorgesehen, durch den ein ausreichender Abdichtungsgrad ohne körperliche Berührung zwischen den Flügeln (20a bis j) und der Begrenzungswand erzielbar ist.

Fig. 2



Rank Xerox (UK) Business Services

Die Erfindung betrifft ein Flügelförderwerk zum Fördern von Masse, insbesondere von Brät wie Brüh-, Koch- oder Rohwurstbrät oder von Fleischstücken oder anderen viskosen Massen, mit

- einem Gehäuse mit einem Einlaß und einem Auslaß für die Masse, und mit
- einem im Gehäuse angeordneten Rotor, der ein drehbar gelagertes zentrales Antriebselement und mehrere bewegliche Flügel aufweist, die am zentralen Antriebselement in dessen Drehrichtung hintereinander und winklig zur Drehrichtung angeordnet und gemeinsam von einer in Bewegungsrichtung der Flügel umlaufenden Begrenzungswand des Gehäuses umgeben sind, mit der Begrenzungswand Förderkammern zur Aufnahme und zum Transport der Masse bilden und bei Rotation des Antriebselementes der Reihe nach am Einlaß und am Auslaß vorbei bewegt werden.

Als Fördervorrichtungen für derartige Aufgaben sind die Schraubenspindelpumpe und die Flügelzellenpumpe bekannt. Solche Pumpen werden zum kontinuierlichen oder portionsweisen Fördern von Brät im allgemeinen so eingesetzt, daß sie eine trichterförmige Zuführeinrichtung mit einer nachfolgenden Abfülleinrichtung verbinden. Von der Zuführeinrichtung gelangt das Brät über den Einlaß in die Pumpe, die das Brät dann unter Druck aus dem Auslaß an die Abfülleinrichtung abgibt. Die Förderung des Bräts unter Druck in die Abfülleinrichtung ist eine Voraussetzung für deren ordnungsgemäße Funktion. Damit die Masse vom Einlaß zum Auslaß gefördert werden kann, bilden die Flügel des Rotors mit der Begrenzungswand Förderkammern, die im Bereich des Einlasses die Masse aufnehmen und im Bereich des Auslasses wieder abgeben. Zur Vermeidung von Lufteinschlüssen in der Masse und zum leichteren Befüllen ist außerdem eine Einrichtung zur Erzeugung eines Unterdruckes oder Vakuums in den Förderkammern vorgesehen.

Ein Flügelförderwerk der zuvor beschriebenen Art ist beispielsweise aus der DE-PS 16 53 843 bekannt. Dort ist im Innenbereich des Rotors eine Nocke unverdrehbar, aber radial verschiebbar angeordnet, auf welcher sich radial bewegliche Flügel mit ihrem in den Rotor ragenden Teil abstützen. Der Nocken ist mit Hilfe einer radialen Schlitzführung und einer Schrägfläche nach außen preßbar. Er drückt dabei im Druckbereich der Pumpe auf den hinteren Teil der vorbeistreichenden Flügel, die so in diesem Bereich mit ihrer Vorderkante gegen die Begrenzungswand des Gehäuses gepreßt werden, um eine verbesserte Abdichtwirkung herbeizuführen. Es hat sich jedoch herausgestellt, daß eine solche Abdichtung der Flügel nicht optimal ist, weil genaugenommen jeweils nur ein Flügel wirklich dicht an der Begrenzungswand des Gehäuses anliegen bzw. an diese angedrückt werden kann. Außerdem ist ein genaues radiales Einstellen und Nachstellen der Flügel nicht möglich und weist dieses bekannte Flügelförderwerk einen komplizierten und großen baulichen Aufwand auf.

Deshalb wird im DE-GM 89 14 705 ein verbessertes Flügelförderwerk vorgeschlagen, bei der zwei sich gegenüberliegende Flügel über einen zentralen Steg miteinander verbunden sind und in einer radialen Ausnehmung der Begrenzungswand des Gehäuses ein Druckstück radial anstellbar gelagert ist, das mit seiner den Flügeln zugewandten Fläche die Kontur der Begrenzungswand ersetzt. Das Druckstück preßt die Flügel gegen die gegenüberliegende Wand in einem Bereich kurz vor dem Auslaß der Pumpe. Auf diese Weise können zumindest zwei Flügel und somit eine Förderkammer druckdicht ausgebildet werden.

Bekannt sind auch solche Flügelförderwerke, bei denen die Flügel axial verstellbar, jedoch ansonsten in ähnlicher Weise durch Anpressen an die Begrenzungswand wie bei den zuvor beschriebenen bekannten Flügelförderwerken abgedichtet sind.

Bei allen herkömmlichen Flügelförderwerken erfolgt die Abdichtung nur durch Anpressen der Flügel an die umlaufende Begrenzungswand des Gehäuses. Die Folge ist ein unerwünschter Abrieb zwischen Flügel und Gehäuse und somit ein nicht unerheblicher Verschleiß der Flügelförderwerke, so daß eine häufige Wartung der Flügelförderwerke (insbesondere durch Austausch des Stators, des Rotors oder zumindest der Flügel) unumgänglich ist. Aufgrund des Verschleißes ist die Förderzelle nicht mehr druckdicht. Damit verschlechtert sich durch Rückstromverluste der Wirkungsgrad, und somit verringert sich die Portioniergenauigkeit in nachteiliger Weise.

Es ist daher Aufgabe der Erfindung, bei einem Flügelförderwerk der eingangs erwähnten Art den Abrieb zwischen den Flügeln und dem Gehäuse und somit den Verschleiß der Pumpe zu reduzieren und dadurch auch die beim Stand der Technik auftretenden Portionierungenauigkeiten zu verringern, so daß die Zuverlässigkeit erhöht werden kann.

Diese Aufgabe wird bei einem Flügelförderwerk der eingangs genannten Art dadurch gelöst, daß Steuermittel zum definierten Heranfahren der Flügel an die Begrenzungswand bis auf einen bestimmten Mindestabstand vorgesehen sind, durch den ein ausreichender Abdichtungsgrad ohne körperliche Berührung zwischen den Flügeln und der Begrenzungswand erzielbar ist.

Das erfindungsgemäße Flügelförderwerk erhält seine Dichtigkeit somit nicht durch Anpressen der Flügel an die Begrenzungswand des Gehäuses, sondern durch ein definiertes Heranfahren an diese Begrenzungswand bis auf ein Mindestmaß, so daß einerseits der gewünschte Abdichtungsgrad erreicht wird, andererseits aber keine metallische Berührung zwischen den Flügeln und dem Gehäuse nötig ist und folglich der Abrieb an der Begrenzungswand entfällt. Zwar verbleibt ein geringer Spalt zwischen den Flügeln und der Begrenzungswand des Gehäuses; jedoch hat sich überraschenderweise gezeigt, daß dieser Spalt so klein gewählt werden kann, daß die Druckdichtigkeit der aus den Flügeln, dem Rotor und der inneren Begrenzungswand gebildeten Förderkammern bei den abzuführenden Bräten im wesentlichen aufrechterhalten werden kann. Sofern an das Flügelförderwerk eine einen Unterdruck oder ein Vakuum erzeugende Einrichtung angeschlossen ist, hat sich gleichfalls überraschenderweise gezeigt, daß ein wesentlicher Verlust des in den Förderkammern von dieser Einrichtung erzeugten Unterdruckes ebenfalls praktisch nicht auftritt.

Die Folge der erfindungsgemäßen abrieblosen Abdichtung der Flügel am Gehäuse ist eine erhebliche Reduzierung des Verschleißes und somit eine Erhöhung der Zuverlässigkeit des Flügelförderwerkes. Die Wartungsintervalle können gegenüber dem Stand der Technik erheblich verlängert werden. Da zwischen den Flügeln und dem Gehäuse keine metallische Berührung mehr erfolgt, kann die Portioniergenauigkeit wesentlich gesteigert werden kann. Ein weiterer Vorteil der erfindungsgemäßen Konstruktion besteht darin, daß man nun frei in der Anwendung von nichtrostenden Stählen wird und dadurch auch besonders hohe Anforderungen an die Hygiene erfüllen kann.

Eine bevorzugte Ausführung der Erfindung zeichnet sich dadurch aus, daS die Steuermittel während der Rotation des zentralen Antriebselementes die Bewegung der Flügel derart steuern, daS das Volumen jeder Förderkammer zwischen den Flügeln auf dem Weg vom Auslaß zum Einlaß auf ein Minimum und anschließend auf ein Maximum gebracht und nach Verlassen des Einlasses auf dem Weg zum Auslaß wieder etwas reduziert wird.

Vorzugsweise ist der Grad der Reduzierbarkeit des Volumens der Förderkammern nach Verlassen des Einlasses einstellbar.

Bei einer Weiterbildung kann in Bewegungsrichtung zwischen dem Auslaß und dem Einlaß ein Unterdruckanschluß vorgesehen sein, der an eine Einrichtung zur Erzeugung des Unterdruckes oder Vakuums angeschlossen ist und an dem die Flügel vorbeibewegt werden.

Die Steuermittel sind bei dieser Ausführung also so ausgelegt, daß die Flügel an den unterschiedlichen Stellen die dort jeweils gewünschte Position einnehmen. Vom Auslaß ausgehend, werden also zunächst die Förderkammern zwischen zwei Flügeln auf ein Minimum gebracht. Anschließend werden die Flügel von den Steuermitteln so bewegt, daß das Volumen der Förderkammern im Bereich des Unterdruckanschlusses beträchtlich vergrößert wird, wodurch eine leere Förderkammer entsteht, an die ein Vakuum bzw. ein Unterdruck angelegt werden kann. Im Bereich des Einlasses wird dann die Förderkammer aufgrund der Druckdifferenz zum Vordruck einer dem Einlaß vorgeschalteten Zuführeinrichtung mit Masse befüllt. Sobald diese nun befüllte Förderkammer mit dem nachlaufenden Flügel den Einlaßbereich verlassen hat, wird ihr Volumen wieder etwas reduziert, wodurch die Masse der soeben befüllten Förderkammer etwas komprimiert wird. Die Druckerhöhung in der soeben befüllten Förderkammer dient einerseits der weiteren Entlüftung der geförderten Masse durch Auspressen von möglicherweise noch vorhandener freier Luft, wozu vorzugsweise zusätzliche Absaugkanäle vorgesehen sein können. Der andere Zweck der Kompression besteht in der Anpassung des Druckes der Masse an den Druck im Auslaßbereich. Je genauer die beiden Drücke übereinstimmen, desto pulsationsfreier wird die Förderung und damit die Genauigkeit der Portionierung.

Bei einer Weiterbildung der zuvor beschriebenen Ausführung kann das Volumen der Förderkammern auf dem Weg vom Unterdruckanschluß zum Einlaß im wesentlichen konstant bleiben.

Um das Volumen der Förderkammern auf ihrem Weg vom Auslaß zum Einlaß in konstruktiv besonders einfacher Weise auf das Minimum zu bringen, kann die Begrenzungswand zwischen Auslaß und Einlaß einen Vorsprung aufweisen, der, in Drehrichtung des Rotors betrachtet, hinter dem Auslaß eine im wesentliche sprunghafte Verringerung des Abstandes zwischen der Begrenzungswand und dem zentralen Antriebselement und zum Einlaßbereich hin eine allmähliche Erweiterung dieses Abstandes bewirkt, der dann bis zum Anschluß im wesentlichen unverändert bleibt.

Gemäß einem weiteren gegenwärtig besonders bevorzugten Aspekt der Erfindung sind die Flügel um eine jeweils eigene Achse verschwenkbar am zentralen Antriebselement gelagert. Die Bewegung der Flügel erfolgt also durch Verschwenken, so daß die Flügel als Schwenkflügel ausgebildet sind, die um ihre Schwenkachse in Richtung der Drehbewegung des Antriebselementes sowie entgegen dieser Richtung verdrehbar sind. Vorzugsweise sollten die Schwenkachsen der Flügel und die Drehachse des zentralen Antriebselementes parallel zueinander verlaufen und bei allen Flügeln der Abstand der Schwenkachse zur Drehachse gleich sein, so daß die Achsen der Flügel im Kreis um die Drehachse des Rotors geführt sind.

Hierbei sollten die Steuermittel während der Rotation des zentralen Antriebselementes die Schwenkbewegung der Flügel derart steuern, daß diese nach Verlassen des Auslaßbereiches zum zentralen Antriebselement hin verschwenkt, bei Annäherung an den Einlaß entsprechend der Kontur der Begrenzungswand aufgeklappt und nach Verlassen des Einlaßbereiches in Drehrichtung des Rotors etwas nach vorn verschwenkt werden.

Vorzugsweise weist das der inneren Begrenzungswand zugewandte freie Ende jedes Flügels zwischen einer vorlaufenden und einer nachlaufenden Kante die Form eines Zylinderabschnittes auf, dessen Achse mit der Schwenkachse des Flügels zusammenfällt, und wird beim Verlassen des Einlaßbereiches der Mindestabstand zur Erzielung eines ausreichenden Abdichtungsgrads zwischen der vorlaufenden Kante des freien Endes des Flügels und der Begrenzungswand gebildet und der Flügel auf dem Weg zum Auslaß soweit in Drehrichtung des Rotors verschwenkt, daß der Mindestabstand anschließend zwischen der nachlaufenden Kante des freien Endes des Flügels und der Begrenzungswand hergestellt wird. Das Maß der Verschwenkung nach Verlassen des Einlaßbereiches in Drehrichtung des Rotors wird also von der Dicke des freien Endes der Flügel zwischen der vorlaufenden und der nachlaufenden Kante bestimmt. Zur Erzielung des geforderten Mindestabstandes während dieser Schwenkbewegung ist das freie Ende jedes Flügels zylinderabschnittsförmig ausgebildet, wobei die Zylinderachse mit der Schwenkachse des Flügels zusammenfällt.

Ebenfalls kann ein sich an den Auslaß anschließender Abschnitt des Vorsprungs die Kontur eines Zylinderabschnittes aufweisen, dessen Achse mit der Drehachse des Rotors zusammenfällt, wobei die Flügel an ihrer Vorderseite eine entsprechende Kontur aufweisen und im Bereich des Vorsprungs so verschwenkt werden, daß sie mit ihrer Vorderseite diesem Abschnitt des Vorsprungs im Mindestabstand zur Erzielung eines ausreichenden Abdichtungsgrads gegenüberliegen. Auf diese Weise wird nach Verlassen des Auslaßbereiches ein längerer, im wesentlichen "flächiger" Dichtspalt zwischen dem Flügel und der inneren Begrenzungswand gebildet.

Eine Weiterbildung dieser Ausführung zeichnet sich dadurch aus, daß

- jeder Flügel über eine eigene Welle am zentralen Antriebselement gelagert ist und
- die Steuermittel Steuerarme, von denen jeweils ein Steuerarm mit seinem einen Ende an einer Welle eines Flügels starr angesetzt ist, und eine um die Drehachse des Rotors herumlaufende, geschlossene, bahnförmige Steuerkurve umfassen, die in oder an einem plattenförmigen Element ausgebildet ist und in der die Steuerarme mit ihrem anderen freien Ende geführt sind.

Entsprechend dem Verlauf der bahnförmigen Kurve werden also die Flügel um deren Schwenkachse in der gewünschten Weise individuell verschwenkt. Die Steuerkurve muß so ausgelegt sein, daß die Flügel an den unterschiedlichen Stellen die dort jeweils gewünschte Position einnehmen. Hierzu weist die Steuerkurve vorzugsweise zwischen Auslaß und Einlaß zuerst einen minimalen Abstand zur Drehachse des Rotors und dann einen vergrößerten Abstand und zwischen Einlaß und Auslaß einen maximalen Abstand auf. Das Maß der Schwenkbewegung der Flügel wird also von der Änderung des Abstandes der Steuerkurve von der Drehachse des zentralen Antriebselementes bestimmt. Dabei ist die Funktionsweise der Steuerarme mit der von Schlepphebeln vergleichbar. Bei Rotation des zentralen Antriebselementes wird dessen Bewegung über die Wellen auf die Flügel übertragen. Da die Steuerarme mit ihrem einen Ende an den Wellen der Flügel starr angebracht sind, wird dann zwangsläufig ihr in der Steuerkurve geführtes hinteres Ende nachgezogen.

Zur Verringerung der Reibung sitzt vorzugsweise am freien Ende jedes Steuerarms eine Rolle, die in der Steuerkurve geführt ist.

Bei einer weiteren bevorzugten Weiterbildung der vorgenannten Ausführung ist das die Steuerkurve aufweisende plattenförmige Element in ein gegenüber dem Gehäuse ortsfestes Element und in ein dazu verschiebbares, jedoch in jeder gewünschten Verschiebestellung fixierbares Element, das den zwischen Einlaß und Auslaß verlaufenden Abschnitt der Steuerkurve aufweist, unterteilt. Im Stand der Technik war das Maß der Kompression vorgegeben durch die Geometrie des Pumpengehäuses und lag daher für dieses Gehäuse fest. Bei dieser Ausführung der Erfindung ist dagegen vorgesehen, daß die Steuerkurve in einen ortsfesten Teil und einen dazu verschiebbaren Teil getrennt wird. Der ortsfeste Teil erstreckt sich über den gesamten Bereich außerhalb des der Vorverdichtung dienenden Abschnittes, während der verstellbare Teil etwa im Bereich zwischen Einlaßbereich und Auslaß angeordnet ist. Da das Maß der Schwenkbewegung der Flügel von der Änderung des Abstandes der Steuerkurve von der Drehachse des zentralen Antriebselementes bestimmt wird, kann mit Hilfe der aufgeteilten Steuerkurve dieser Abstand im Bereich der Verdichtung verändert werden. Demnach kann entsprechend der Kompressibilität der Masse der Druck in den Förderkammern genau an den Auslaßdruck angepaßt werden.

Zweckmäßigerweise ist der Auslaß in der umlaufenden Begrenzungswand des Gehäuses ausgebildet. Die Begrenzungswand kann die Form eines Zylinders besitzen, dessen Achse mit der Drehachse des Rotors zusammenfällt.

Bei einer weiteren zweckmäßigen Ausführung können die Flügel am zentralen Antriebselement abnehmbar befestigt sein, wobei vorzugsweise jeder Flügel drehfest auf die zugehörige Welle aufgesteckt ist. Ein Vorteil dieser Ausführung besteht darin, daß man zu Reinigungszwecken nur noch vergleichsweise kleine Teile, nämlich die Flügel, aus dem Flügelförderwerk herausnehmen muß und nicht mehr die vergleichsweise schweren Statoren, Rotoren oder Flügelzelleneinsätze in ihrer Gesamtheit wie beim Stand der Technik. Ein weiterer Vorteil ist die vergleichsweise einfache Möglichkeit der Anpassung des erfindungsgemäßen Flügelförderwerkes an unterschiedliche Massen. Einerseits handelt es sich hier um Emulsionen wie Brüh-, Koch- oder Rohwurstbrät, und zum anderen kann es sich aber auch um Fleischstücke größerer Dimensionen handeln, beispielsweise Schinken, Putenbrüste etc.. Letztere können zwar als größere Stücke auch beim Stand der Technik zugeführt werden, werden aber aufgrund der festgelegten Größe der Förderkammern bislang meist abgeschert und zerkleinert aus der Förderzellenpumpe herausgefördert. Bei dieser Ausführung der Erfindung kann man die Förderkammergröße durch Herausnehmen von z.B. jedem zweiten Schwenkflügel verdoppeln und dadurch eine einfache Umstellung auf die unterschiedlichen Fördermassen erreichen, ohne daß die Druckdichtigkeit verändert würde. Beim Stand der Technik war zwar auch ein Herausnehmen der Flügel möglich, jedoch wurde dabei der Führungsschlitz für den herausgenommenen Flügel im Antriebselement freigegeben und damit die Abdichtung zwischen der Förderzelle und dem Pumpengehäuse aufgegeben.

Nachfolgend wird ein bevorzugtes Ausführungsbeispiel der Erfindung anhand der beiliegenden Figuren näher erläutert. Es zeigen:

Fig. 1
einen Längsschnitt durch ein Flügelförderwerk;

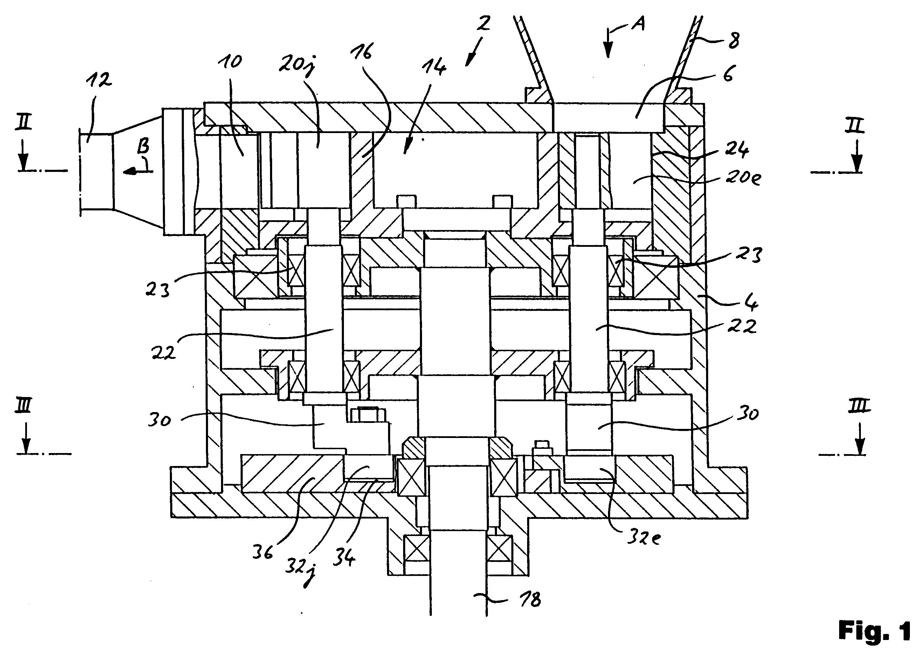

Fig. 2
einen Querschnitt durch das Flügelförderwerk entlang der Linie II-II von Fig. 1;

Fig. 3
einen Querschnitt durch das Flügelförderwerk entlang der Linie III-III von Fig. 1; und

Figuren 4a und b
eine vergrößerte Einzeldarstellung eines Flügels mit daran befestigter Welle und einem daran angesetzten Steuerarm.

Wie Fig. 1 erkennen läßt, besitzt das dort dargestellte Flügelförderwerk 2 ein Gehäuse 4 mit einem Einlaß 6, an dem eine trichterförmige Zuführeinrichtung 8 angeschlossen ist, und mit einem Auslaß 10, an dem eine Abfülleinrichtung wie z.B. das dargestellte Abfüllrohr 12 angeschlossen ist. Der Einlaß 6 ist als Öffnung in der Deckplatte des Gehäuses 4 ausgebildet, so daß die trichterförmige Zuführeinrichtung 8 auf der Oberseite des Flügelförderwerkes 2 sitzt. Der Auslaß 10 ist dagegen als Öffnung in einer Seitenwand des Gehäuses 4 ausgebildet.

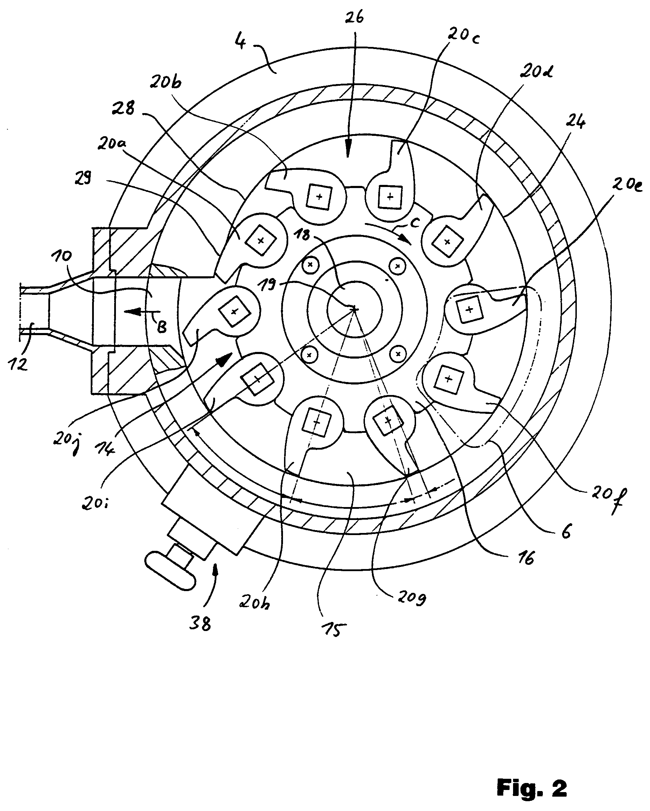

Innerhalb einer im Gehäuse 4 ausgebildeten Kammer 15 ist ein Rotor 14 angeordnet, der ein drehbar gelagertes zentrales Antriebselement 16 aufweist, welches über eine Drehwelle 18 von einem nicht dargestellten Antrieb angetrieben wird. Wie Fig. 2 erkennen läßt, ist das zentrale Antriebselement 16 im wesentlichen als kreisförmige Scheibe ausgebildet.

Wie die Figuren 1 und 2 ferner erkennen lassen, sind mehrere Flügel 20a bis j entlang des Umfangs des zentralen Antriebselementes 16 angeordnet. Hierzu ist jeder der Flügel 20a bis j drehfest auf einer Welle 22 befestigt, welche mittels Kugel- oder Rollenlager 23 am zentralen Antriebselement 16 drehbar gelagert ist. Die Drehachsen der Wellen 22 der einzelnen Flügel 20a bis j verlaufen parallel zur Drehachse 19 der Drehwelle 18 des zentralen Antriebselementes 16. Der Abstand der Drehachsen der Wellen 22 zur Drehachse 19 des zentralen Antriebselementes 16 ist bei allen Flügel 20a bis j gleich, so daß die Drehachsen der Wellen 22 auf einem Kreis um die Drehachse 19 angeordnet sind. Auch ist der Abstand zwischen den einzelnen Wellen 22 konstant.

Wie Fig. 2 erkennen läßt, ist der gesamte Rotor 14 von einer umlaufenden, inneren Begrenzungswand 24 umgeben. Diese innere Begrenzungswand 24 ist Teil der Kammer 15, die im Gehäuse 4 ausgebildet ist und u.a. auch von der oberen Deckplatte begrenzt wird und in der der Rotor 14 sitzt. Die Flügel 20a bis j sind am zentralen Antriebselement 16 derart angeordnet, daß sie mit ihrem freien Ende in Richtung auf die umlaufende, innere Begrenzungswand 24 verschwenkbar sind, wie Fig. 2 erkennen läßt.

Jeweils zwei benachbarte Flügel der Flügel 20a bis j bilden mit der umlaufenden Begrenzungswand 24 eine Förderkammer zur Aufnahme von Bräten oder auch von Fleischstücken im Bereich des Einlasses 6 von oben gemäß Pfeil A und zum Transport bei Rotation des Antriebselementes 16 zum Auslaß 10, wo sie seitlich gemäß Pfeil B wieder abgegeben wird. Dementsprechend sind der Einlaß 6 und der Auslaß 10 so ausgebildet, daß sie in die Kammer 15 münden, in der der Rotor 14 sitzt. Da der Auslaß 10 an der Seite des Gehäuses 4 angeordnet ist, wie bereits anhand von Fig. 1 erwähnt worden ist, ist auch die umlaufende, innere Begrenzungswand 24, welche im wesentlichen parallel zur seitlichen Außenwand des Gehäuses 4 verläuft, mit einer entsprechenden Öffnung zur Bildung des Auslasses 10 versehen, wie insbesondere Fig. 2 erkennen läßt.

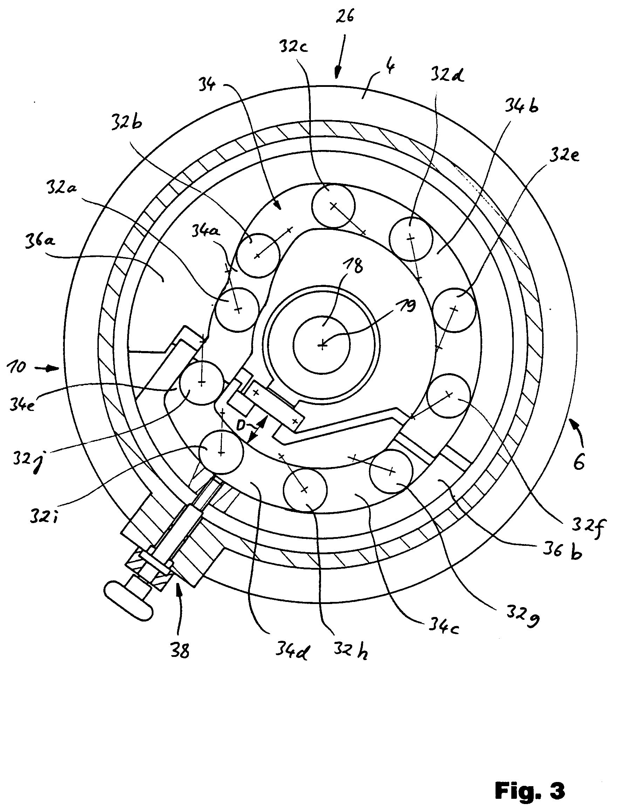

In Bewegungsrichtung des Rotors 14 gemäß Pfeil C in Fig. 2 ist zwischen dem Auslaß 10 und dem Einlaß 6 ein Unterdruckanschluß vorgesehen, der die Kammer 15, in der der Rotor 14 sitzt, mit einer nicht näher dargestellten Einrichtung zur Erzeugung eines Unterdrucks bzw. Vakuums verbindet und an dem die Flügel 20a bis j in gleicher Weise wie an dem Einlaß 6 und dem Auslaß 10 vorbei bewegt werden. Die Lage des Unterdruckanschlusses ist in den Figuren 2 und 3 durch einen Pfeil mit dem Bezugszeichen 26 gekennzeichnet.

Wie Fig. 2 außerdem zeigt, ist an der umlaufenden, inneren Begrenzungswand 24, in Drehrichtung des Rotors 14 gemäß Pfeil C betrachtet, ein nach innen vorspringendes Kurvenstück oder Vorsprung 28 vorgesehen, der sich direkt am Auslaß 10 anschließt und eine sprunghafte Verringerung des Abstandes zwischen der Begrenzungswand 24 und dem kreisförmigen zentralen Antriebselement 16 bewirkt. Wie Fig. 2 ferner erkennen läßt, ist ein sich direkt an den Auslaß 10 anschließender Abschnitt 29 des Vorsprungs 28 zylinderabschnittsförmig ausgebildet, wobei die Zylinderachse mit der Drehachse 19 des Rotors 14 zusammenfällt. In Richtung zum Unterdruckanschluß 26 hin nimmt die Dicke des Vorsprungs 28 allmählich ab, so daß der Abstand zwischen der Begrenzungswand 24 und dem zentralen Antriebselement 16 allmählich vergrößert wird. Dieser Abstand bleibt dann nach dem Unterdruckanschluß 26 über den Einlaß 6 bis hin zum Auslaß 10 im wesentlichen unverändert. Da der Auslaß 10 und der Unterdruckanschluß 26 etwa im Winkel von 45° bis 90° zueinander angeordnet sind und nur in dem dazwischen liegenden Abschnitt der Begrenzungswand 24 der Vorsprung 28 ausgebildet ist, verläuft die Begrenzungswand 24 im übrigen Abschnitt, d.h. vom Unterdruckanschluß 26 über den Einlaß 6 bis zum Auslaß 10, über etwa 315° bis 270° im wesentlichen zylinderförmig, wobei die Zylinderachse mit der Drehachse 19 des Rotors 14 zusammenfällt.

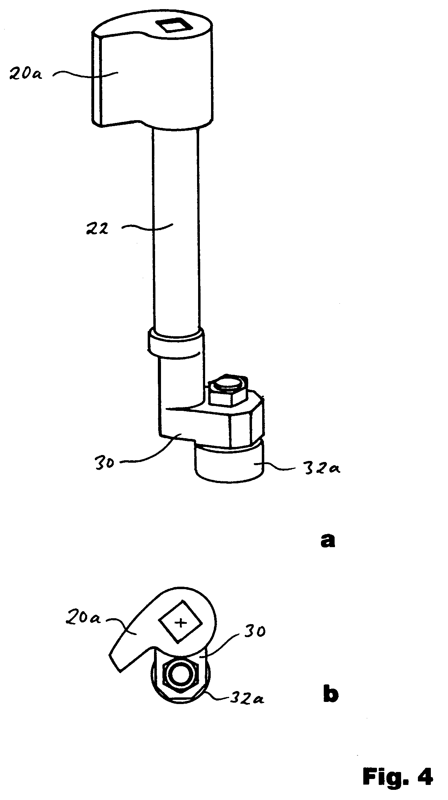

Wie bereits erwähnt, sind die einzelnen Flügel 20a bis j auf jeweils einer eigenen Welle 22 befestigt. Dabei sind die Flügel 20a bis j drehfest auf das eine Ende der Wellen 22 gesteckt, und zwar so, daß sie jederzeit zum Zwecke des Austausches, der Wartung oder der Reinigung leicht aus der Kammer 15 bei abgenommener Deckplatte entfernt werden können. Am gegenüberliegenden Ende der Wellen 22 ist jeweils ein Steuerarm 30 drehfest befestigt. Somit sind Flügel und Steuerarm in einem bestimmten Winkel zueinander starr an der Welle 22 befestigt, wie Fig. 4 erkennen läßt. Insbesondere Fig. 4b läßt erkennen, daß der dort dargestellte Flügel 20a und der Steuerarm 30 in einem bestimmten Winkel zueinander angeordnet sind. Diese Anordnung ist bei allen Flügel 20a bis j gleich. Am freien Ende des Steuerarms 30 ist eine Laufrolle (32a in Fig. 4) gelagert, dessen Drehachse parallel zur Schwenkachse der Welle 22 verläuft.

Eine um die Drehachse 19 des Rotors 14 herumlaufende, geschlossene, bahnförmige Steuernut 34 ist in einer außerhalb der Kammer 15 angeordneten Platte 36 ausgebildet, wie in den Figuren 1 und 3 dargestellt ist. In der Steuernut 34 sind die Laufrollen 32a bis j der Steuerarme 30 geführt. Dabei ist die Breite der Steuernut 34 geringfügig größer als der Durchmesser der Laufrollen 32a bis j, wobei der Durchmesser bei allen Laufrollen 32a bis j konstant ist.

Während der Rotation des zentralen Antriebselementes 16 sollen nun die Steuerarme 30 in Zusammenwirken mit der Steuernut 34 die Schwenkbewegung der einzelnen Flügel 20a bis j so steuern, daß die Flügel 20a bis j der Kontur der Begrenzungswand 24 folgen und dabei stets einen bestimmten Mindestabstand zur umlaufenden Begrenzungswand 24 aufweisen, durch den in Zusammenwirkung mit der Einrichtung zur Erzeugung des Unterdruckes bzw. Vakuums ein ausreichender Abdichtungsgrad ohne metallische Berührung zwischen den Flügeln 20a bis j und der Begrenzungswand 24 erzielbar ist.

Außerdem sollen die Steuernut 34 und die Steuerarme 30 die Schwenkbewegung der einzelnen Flügel 20a bis j bei Rotation des zentralen Antriebselementes 16 so steuern, daß das Volumen jeder Förderkammer zwischen den einzelnen Flügeln auf dem Weg vom Auslaß 10 zum Unterdruckanschluß 26 auf ein Minimum gebracht, bei Erreichen des Unterdruckanschlusses 26 beträchtlich vergrößert wird, auf dem Weg vom Unterdruckanschluß 26 zum Einlaß 6 im wesentlichen konstant bleibt und nach Verlassen des Einlasses 6 auf dem Weg zum Auslaß 10 wieder etwas reduziert wird.

Dabei müssen die Flügel nach Verlassen des Auslaßbereiches 10 zum zentralen Antriebselement 16 hin verschwenkt werden (vgl. Flügel 20a in Fig. 2), da aufgrund des Vorsprunges 28 der Abstand der inneren Begrenzungswand 24 zum zentralen Antriebselement 16 sprunghaft verringert wird. Die Flügel weisen an ihrer Vorderseite eine dem zylinderabschnittsförmigen Abschnitt 29 des Vorsprungs 28 entsprechende Kontur auf und werden im Bereich dieses Abschnittes 29 so verschwenkt, daß sie mit ihrer Vorderseite diesem Abschnitt 29 im Mindestabstand zur Erzielung eines ausreichenden Abdichtungsgrads gegenüberliegen und somit über die gesamte Länge dieses Abschnittes 29 des Vorsprungs 28 einen im wesentlichen "flächigen" Dichtungsspalt erzeugen.

Bei Annäherung an den Unterdruckanschluß 26 werden die Flügel entsprechend der Kontur des Vorsprunges 28 aufgeklappt (vgl. Flügel 20b und c in Fig. 2), um die Förderkammern von Luft leerpumpen zu können, und verbleiben im wesentlichen in dieser Schwenkstellung, bis der Einlaß 6 erreicht wird (vgl. Flügel 20d bis f in Fig. 2). In dieser Schwenkstellung wird der Mindestabstand zur Erzielung eines ausreichenden Abdichtungsgrads zwischen der vorlaufenden Kante des freien Endes des Flügels und der Begrenzungswand 24 gebildet, wie Fig. 2 erkennen läßt. Sobald die Flügel den Einlaßbereich 6 verlassen haben (vgl. Flügel 20g in Fig. 2), werden sie in Drehrichtung des Rotors 14 gemäß Pfeil C noch etwas nach vorn verschwenkt, um das durch den Einlaß 6 aufgenommene Brät ein wenig zu komprimieren, und verbleiben in dieser Schwenkstellung bis zum Erreichen des Auslasses 10 (vgl. Flügel 20h und i in Fig. 2). In dieser Schwenkstellung wird nun der Mindestabstand zwischen der nachlaufenden Kante des freien Endes des Flügels und der Begrenzungswand 24 hergestellt. Um ein solches Verschwenken unter Einhaltung des geforderten Mindestabstandes zwischen den Flügeln 20a bis j und der inneren Begrenzungswand 24 ermöglichen zu können, sind die freien Enden der Flügel 20a bis j ein wenig abgerundet und haben die Form eines Zylinderabschnittes, dessen Achse mit der Schwenkachse des jeweiligen Flügels zusammenfällt.

Bei Erreichen des Auslasses 10 wird der Flügel wieder in Richtung auf das zentrale Antriebselement 16 zurückgeschwenkt (vgl. Flügel 20j in Fig. 2), um einen Austritt des Brätes durch den Auslaß 10 zur Abfülleinrichtung 12 zu ermöglichen und um bei fortgesetzter Rotation des Rotors 14 in den Zwischenraum zwischen dem Vorsprung 28 und dem zentralen Antriebselement 16 aufgenommen werden zu können.

Die Steuernut 34 muß also so ausgelegt sein, daß die Flügel 20a bis j an den unterschiedlichen Stellen die dort jeweils gewünschte Position in der zuvor beschriebenen Weise gemäß Fig. 2 einnehmen. Wie Fig. 3 erkennen läßt, weist die Steuernut 34 hierzu verschiedene Abschnitte 34a, b, c, d und e auf, die unterschiedliche Abstände zur Drehachse 19 des Rotors 14 und unterschiedliche Verläufe besitzen. Der erste Abschnitt 34a der Steuerkurve 34 entspricht dem Weg der Flügel zwischen dem Auslaß 10 und dem Unterdruckanschluß 26. Dieser Abschnitt 34a ist dabei so geführt, daß im Bereich des Auslasses 10 der Abstand der Steuerkurve 34 zur Drehachse 19 minimal ist und bei Annäherung an den Unterdruckanschluß 26 vergrößert wird. Der Abschnitt 34a besitzt daher einen im wesentlichen geradlinigen Verlauf und endet in einer relativ scharfen Kurve in den zweiten Abschnitt 34b der Steuerkurve 34, welcher etwa viertelkreisförmig um die Drehachse 19 zum Einlaßbereich 6 verläuft. An den zweiten Abschnitt 34b schließt sich ein dritter Abschnitt 34c an, der etwa über 60° bogenförmig um die Drehachse 19 bei sich vergrößerndem Abstand verläuft. Am Ende des dritten Abschnittes 34c weist die Steuernut 34 ihren größten radialen Abstand zur Drehachse 19 auf. Der Radius des sich an den dritten Abschnitt 34c anschließenden vierten Abschnittes 34d zur Drehachse 19 bleibt im wesentlichen konstant. Dieser vierte Abschnitt 34d verläuft etwa achtelkreisförmig und mündet im Einlaßbereich 10 in einen fünften Abschnitt 34e, der sich in einem scharfen Knick in Richtung auf das zentrale Antriebselement 16 anschließt und mit dem ersten Abschnitt 34a verbunden ist. Ergänzend sei angemerkt, daß in Fig. 3 die Positionen des Einlasses und des Auslasses nur durch entsprechende Pfeile, gekennzeichnet mit den zugehörigen Bezugszeichen, angedeutet sind und daß die Positionen der einzelnen dargestellten Laufrollen 32a bis j in der Steuernut 34 den Stellungen der in Fig. 2 dargestellten Flügeln 20a bis j entsprechen.

Das Maß der Schwenkbewegung der Flügel 20a bis j wird also von der Änderung des Abstandes der Steuernut 34 von der Drehachse 19 des Rotors 14 bzw. des zentralen Antriebselementes 16 bestimmt. Dabei ist die Funktionsweise der Steuerarme 30 mit der von Schlepphebeln vergleichbar. Bei Rotation des zentralen Antriebselementes 16 wird dessen Bewegung über die Wellen 22 (vgl. Figuren 1 und 4) auf die Flügel 20a bis j übertragen. Da die Steuerarme 30 mit ihrem einen Ende an den Wellen 22 der Flügel 20a bis j starr angebracht sind, wird dann zwangsläufig ihr über die Laufrollen 32a bis j in der Steuernut 34 geführtes hinteres Ende nachgezogen.

Wie Fig. 3 ferner erkennen läßt, ist die die Steuernut 34 aufnehmende Platte 36 in ein gegenüber dem Gehäuse 4 ortsfestes Element 36a und in ein dazu in Richtung des Pfeils D verschiebbares, jedoch in jeder gewünschten Verschiebestellung fixierbares Element 36b unterteilt. Das ortsfeste Element 36a weist die Abschnitte 34a und b der Steuernut 34 auf, während im verschiebbaren Element 36b die Abschnitte 34b bis e der Steuernut 34 ausgebildet sind. Demnach ist die Steuernut 34 gleichfalls in einen ortsfesten Teil und einen dazu verschiebbaren Teil unterteilt. Der ortsfeste Teil der Steuernut 34 erstreckt sich somit über den gesamten Bereich außerhalb der der Vorverdichtung dienenden Abschnitte 34c bis e, während der verstellbare Teil etwa im Bereich zwischen Einlaßbereich 6 und Auslaßbereich 10 angeordnet ist. Da das Maß der Schwenkbewegung der Flügel 20a bis j von der Änderung des Abstandes der Steuernut 34 von der Drehachse 19 des Rotors 14 bestimmt wird, kann mit Hilfe der aufgeteilten Steuernut 34 dieser Abstand im Bereich der Verdichtung verändert werden, wobei allerdings stets der Mindestabstand zwischen den Flügeln 20a bis j und der umlaufenden inneren Begrenzungswand 24 gewahrt bleiben muß. Demnach kann entsprechend der Kompressibilität der Masse der Druck in den Förderkammern zwischen den Flügeln 20a bis j genau an den Auslaßdruck angepaßt werden. Zur Verstellung und Fixierung des verschiebbaren Elementes 36b ist ein entsprechender Verstellmechanismus 38 vorgesehen.

Die zuvor beschriebene Ausführung eines Flügelförderwerkes 2 dient zur Förderung von Bräten wie Brüh-, Koch- oder Rohwurstbrät. Es können aber auch Fleischstücke oder auch andere Arten von viskosen Massen verarbeitet werden.

Im dargestellten Ausführungsbeispiel werden zehn Flügel 20a bis j verwendet. Die Funktion des beschriebenen Flügelförderwerkes ist jedoch auf diese Anzahl nicht beschränkt.

## Patentansprüche

**1.** Flügelförderwerk zum Fördern von Masse, insbesondere von Brät wie Brüh-, Koch- oder Rohwurstbrät oder von Fleischstücken, mit
- einem Gehäuse (4) mit einem Einlaß (6) und einem Auslaß (10) für die Masse, und mit
- einem im Gehäuse (4) angeordneten Rotor (14), der ein drehbar gelagertes zentrales Antriebselement (16) und mehrere bewegliche Flügel (20a bis j) aufweist, die am zentralen Antriebselement (16) in dessen Drehrichtung (C) hintereinander und winklig zur Drehrichtung (C) angeordnet und gemeinsam von einer in Bewegungsrichtung (C) der Flügel (20a bis j) umlaufenden Begrenzungswand (24) des Gehäuses (4) umgeben sind, mit der Begrenzungswand (24) Förderkammern zur Aufnahme von Masse bilden und bei Rotation des Antriebselementes (16) der Reihe nach am Einlaß (6) und am Auslaß (10) vorbei bewegt werden,

gekennzeichnet durch
- Steuermittel (30, 34) zum definierten Heranfahren der Flügel (20a bis j) an die Begrenzungswand (24) bis auf einen bestimmten Mindestabstand, durch den ein ausreichender Abdichtungsgrad ohne körperliche Berührung zwischen den Flügeln (20a bis j) und der Begrenzungswand (24) erzielbar ist.

**2.** Flügelförderwerk nach Anspruch 1, dadurch gekennzeichnet, daß die Steuermittel (30, 34) während der Rotation des zentralen Antriebselementes (16) die Bewegung der Flügel (20a bis j) derart steuern, daß das Volumen jeder Förderkammer zwischen den Flügeln (20a bis j) auf dem Weg vom Auslaß (10) zum Einlaß (6) zuerst auf ein Minimum und anschließend auf ein Maximum gebracht und nach Verlassen des Einlasses (6) auf dem Weg zum Auslaß (10) wieder etwas reduziert wird.

**3.** Flügelförderwerk nach Anspruch 2, dadurch gekennzeichnet, daß der Grad der Reduzierbarkeit des Volumens der Förderkammern nach Verlassen des Einlasses (6) einstellbar ist.

**4.** Flügelförderwerk nach Anspruch 2 oder 3, dadurch gekennzeichnet, daß in Bewegungsrichtung (C) zwischen dem Auslaß (10) und dem Einlaß (6) ein Unterdruckanschluß (26) vorgesehen ist, der an eine Einrichtung zur Erzeugung des Unterdruckes oder Vakuums angeschlossen ist und an dem die Flügel (20a bis j) vorbeibewegt werden.

**5.** Flügelförderwerk nach Anspruch 4, dadurch gekennzeichnet, daß das Volumen der Förderkammern auf dem Weg vom Unterdruckanschluß (26) zum Einlaß (6) im wesentlichen konstant bleibt.

**6.** Flügelförderwerk nach einem der Ansprüch 2 bis 5, dadurch gekennzeichnet, daß die Begrenzungswand (24) einen Vorsprung (28) aufweist, der, in Drehrichtung (c) des Rotors (14) betrachtet, hinter dem Auslaß (10) eine im wesentlichen sprunghafte Verringerung des Abstandes zwischen der Begrenzungswand (24) und dem zentralen Antriebselement (16) und zum Einlaßbereich (6) hin eine allmähliche Erweiterung dieses Abstandes bewirkt, der dann bis zum Auslaß (10) im wesentlichen unverändert bleibt.

**7.** Flügelförderwerk nach einem der Ansprüche 1 bis 6, dadurch gekennzeichnet, daß die Flügel (20a bis j) um eine jeweils eigene Achse verschwenkbar am zentralen Antriebselement (16) gelagert sind.

**8.** Flügelförderwerk nach Anspruch 7, dadurch gekennzeichnet, daß die Schwenkachsen der Flügel (20a bis j) und die Drehachse (19) des zentralen Antriebselementes (16) parallel zueinander verlaufen.

**9.** Flügelförderwerk nach Anspruch 8, dadurch gekennzeichnet, daß bei allen Flügeln (20a bis j) der Abstand der Schwenkachse zur Drehachse (19) gleich ist.

**10.** Flügelförderwerk nach Anspruch 4 und einem der Ansprüche 7 bis 9, dadurch gekennzeichnet, daß die Steuermittel (30, 34) während der Rotation des zentralen Antriebselementes (16) die Schwenkbewegung der Flügel (20a bis j) derart steuern, daß diese nach Verlassen des Auslaßbereiches (10) zum zentralen Antriebselement (16) hin verschwenkt, vor Annäherung an den Einlaß (6) entsprechend der Kontur der Begrenzungswand (24) in Drehrichtung (c) des Rotors (14) aufgeklappt und nach Verlassen des Einlaßbereiches (6) noch etwas weiter in Drehrichtung (C) des Rotors (14) verschwenkt werden.

**11.** Flügelförderwerk nach Anspruch 10, dadurch gekennzeichnet, daß die Begrenzungswand (24) im wesentlichen die Form eines Zylinders besitzt, dessen Achse mit der Drehachse (19) des Rotors (14) zusammenfällt.

**12.** Flügelförderwerk nach Anspruch 11, dadurch gekennzeichnet, daß das der inneren Begrenzungswand (24) zugewandte freie Ende jedes Flügels (20a bis j) zwischen einer vorlaufenden und einer nachlaufenden Kante die Form eines Zylinderabschnittes aufweist, dessen Achse mit der Schwenkachse des Flügels zusammenfällt, und daß beim Verlassen des Einlaßbereiches (6) der Mindestabstand zur Erzielung eines ausreichenden Abdichtungsgrads zwischen der vorlaufenden Kante des freien Endes des Flügels (20a bis j) und der Begrenzungswand (24) gebildet wird und der Flügel (20a bis j) auf dem Weg zum Auslaß (10) soweit in Drehrichtung des Rotors (14) verschwenkt wird, daß der Mindestabstand anschließend zwischen der nachlaufenden Kante des freien Endes des Flügels und der Begrenzungswand (26) hergestellt wird.

**13.** Flügelförderwerk nach Anspruch 6 und Anspruch 11 oder 12, dadurch gekennzeichnet, daß ein sich an den Auslaß (10) anschließender Abschnitt (29) des Vorsprungs (28) die Kontur eines Zylinderabschnittes aufweist, dessen Achse mit der Drehachse (19) des Rotors (14) zusammenfällt, und daß die Flügel (20a bis j) an ihrer Vorderseite eine entsprechende Kontur aufweisen und im Bereich des Vorsprungs (28) so verschwenkt werden, daß sie mit ihrer Vorderseite diesem Abschnitt (29) des Vorsprungs (28) im Mindestabstand zur Erzielung eines ausreichenden Abdichtungsgrads gegenüberliegen.

**14.** Flügelförderwerk nach den Ansprüchen 7 bis 13, dadurch gekennzeichnet, daß

- jeder Flügel (20a bis j) über eine eigene Welle (22) am zentralen Antriebselement (16) gelagert ist und
- die Steuermittel (30, 34) Steuerarme (30), von denen jeweils ein Steuerarm (30) mit seinem einen Ende an einer Welle (22) eines Flügels (20a bis j) starr angesetzt ist, und eine um die Drehachse (19) des Rotors (14) herumlaufende, geschlossene, bahnförmige Steuerkurve (34) umfassen, die in oder an einem plattenförmigen Element (36) ausgebildet ist und in der die Steuerarme (30) mit ihrem anderen freien Ende geführt sind.

**15.** Flügelförderwerk nach den Ansprüchen 6, 10 und 14, dadurch gekennzeichnet, daß die Steuerkurve (34) zwischen Auslaß (10) und Einlaß (6) zuerst einen minimalen Abstand zur Drehachse (19) des Rotors (14) und dann einen vergrößerten Abstand und zwischen Einlaß (6) und Auslaß (10) einen maximalen Abstand aufweist.

**16.** Flügelförderwerk nach Anspruch 14 oder 15, dadurch gekennzeichnet, daß am freien Ende jedes Steuerarms (30) eine Rolle (32a bis j) sitzt, die in der Steuerkurve (34) geführt ist.

**17.** Flügelförderwerk nach einem der Ansprüche 14 bis 16, dadurch gekennzeichnet, daß das die Steuerkurve (34) aufweisende plattenförmige Element (36) in ein gegenüber dem Gehäuse (4) ortsfestes Element (36a) und in ein dazu verschiebbares, jedoch in jeder gewünschten Verschiebestellung (D) fixierbares Element (36b), das den zwischen Einlaß (6) und Auslaß (10) verlaufenden Abschnitt (34c, d) der Steuerkurve (34) aufweist, unterteilt ist.

**18.** Flügelförderwerk nach einem der Ansprüche 1 bis 17, dadurch gekennzeichnet, daß der Auslaß (10) in der umlaufenden Begrenzungswand (24) des Gehäuses (4) ausgebildet ist.

**19.** Flügelförderwerk nach einem der Ansprüche 1 bis 18, dadurch gekennzeichnet, daß die Flügel (20a bis j) am zentralen Antriebselement (16) abnehmbar befestigt sind.

**20.** Flügelförderwerk nach den Ansprüchen 19 und 14, dadurch gekennzeichnet, daß jeder Flügel (20a bis j) drehfest auf die zugehörige Welle (22)

aufgesteckt ist.

II
III
8
6
24
20e
23
4
22
30
32e
A
2
14
16
20i
10
18
34
32i
36
23
22
30
B
12
II
III


Fig. 1

26
4
20c
20b
20d
28
24
20a
29
20e
C
18
10
19
B
12
20j
14
20i
20f
6
16
38
20h
15
20g

Fig. 2

26
32c
4
32d
34
34b
32b
32e
32a
34a
36a
18
19
10
34e
D
32j
6
32i
32f
36 b
32g
34c
38
34d
32 h

Fig. 3

20a
22
30
32a
a

20a
30
32a
b

Fig. 4

Europäisches Patentamt

# EUROPÄISCHER RECHERCHENBERICHT

Nummer der Anmeldung

EP 92 10 5091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-C-480 159 (MAX MICHAEL) | 1,7,8, 14,16 | A22C11/08 F04C2/44 |
| A | * Seite 2, Zeile 33 - Zeile 100; Ansprüche 1,2 * | 2,6, 10-12,15 | |
| A | DE-B-1 064 839 (BECKER) * das ganze Dokument * | 1,2, 4-14, 18-20 | |
| A | EP-A-0 388 625 (BAADER) * Spalte 3, Zeile 4 - Zeile 50 * | 1 | |
| A | FR-A-2 037 771 (HANDTMANN) | | |
| A | DE-A-2 812 363 (NICCOLAI) | | |
| A | US-A-2 153 587 (PARREIRA) | | |
| A | GB-A-957 593 (MURPHY) | | RECHERCHIERTE SACHGEBIETE (Int. Cl.5 ) |
| A | FR-A-2 367 205 (ETUDES ET REALISATIONS FINANCIERES ET COMMERCIALES) | | A22C F04C F01C |
| A | WO-A-8 900 814 (JOSEF KOCH) | | |

Der vorliegende Recherchenbericht wurde für alle Patentansprüche erstellt

| Recherchenort | Abschlußdatum der Recherche | Prüfer |
|---|---|---|
| DEN HAAG | 02 JULI 1992 | DE LAMEILLIEURE D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)